# EUROPEAN PATENT SPECIFICATION

(11) **EP 3 735 819 B1**
(45) Date of publication and mention of the grant of the patent: **03.01.2024**
(21) Application number: 20173802.8
(22) Date of filing: 11.05.2020
(51) Int. Cl.: A01F 15/04, A01F 15/08, B30B 9/30, E02F 9/20

(54) **HYBRID AGRICULTURAL VEHICLE FOR BALER APPLICATION**
LANDWIRTSCHAFTLICHES HYBRIDFAHRZEUG ZUR VERWENDUNG MIT BALLEN
VÉHICULE AGRICOLE HYBRIDE POUR APPLICATION DE RAMASSEUSE-PRESSE

(30) Priority: 10.05.2019 IT 201900006731
(43) Date of publication of application: 11.11.2020
(73) Proprietor: CNH Industrial Italia S.p.A., 10156 Torino (IT)
(72) Inventor: Benevelli, Alessandro, 42020 Albinea (IT); Forte, Michelantonio, 41100 Modena (IT); Mariniello, Ciro, 41043 Formigine (IT); Pintore, Francesco, 41121 Modena (IT); Borghi, Alberto, 41122 Modena (IT)
(74) Representative: CNH Industrial IP Department

(56) References cited:
- EP-A1- 3 398 427
- WO-A1-2016/005323
- WO-A1-2016/005334
- DE-A1-102013 208 320
- DE-A1-102018 209 939

## Description

### TECHNICAL FIELD

The present invention concerns a hybrid agricultural vehicle for baler application.

### BACKGROUND OF THE INVENTION

A baler, most often called a hay baler, is a piece of farm machinery used to compress a cut and raked crop (such as hay, cotton, flax straw, salt marsh hay, or silage) into compact bales that are easy to handle, transport, and store. Often, bales are configured to dry and preserve some intrinsic (e.g. the nutritional) value of the plants bundled. Several different types of balers are commonly used, each producing a different type of bale - rectangular or cylindrical, of various sizes, bound with twine, strapping, netting, or wire.

The baler is normally towed by an agricultural vehicle (normally a tractor) and is powered by the PTO of the tractor.

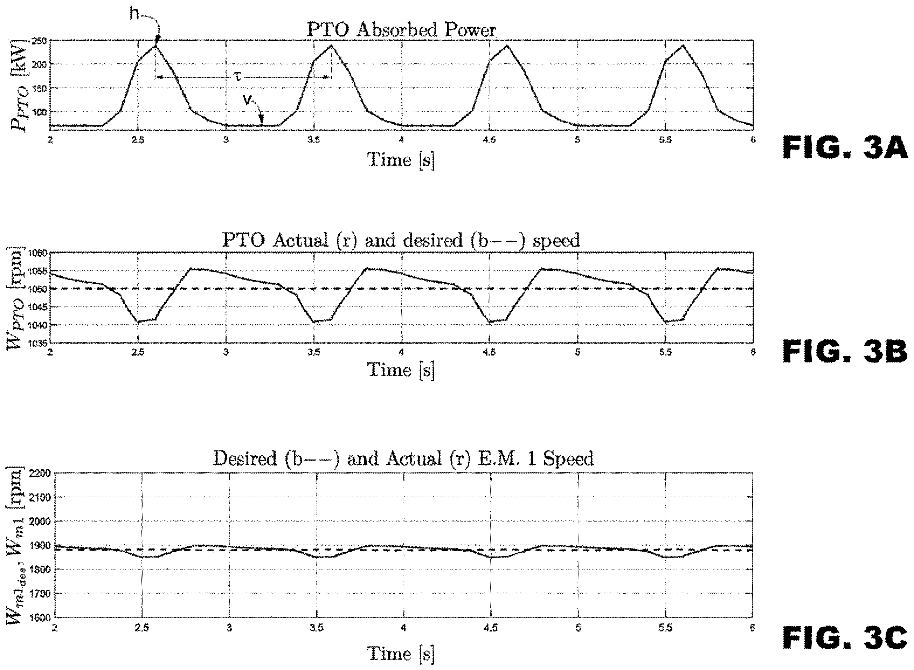

A common feature of the baler is that it requires a highly variable torque that is severely undulating between a higher value corresponding to a starting phase crop pressing to a lower value corresponding to the end of the pressing phase (we refer to figure 3A). This request of variable torque produces a variation of the speed of the motor (we refer to figure 3B) of the tractor that cause a corresponding undulation of the speed of the tractor.

This "start and stop" motion of the tractor is quite undesirable as it produces an evident discomfort to the driver. DE102013208320 discloses a method for determining a control parameter of a power or torque distribution regulator for a hybrid drive of a work machine having the steps of automatically determining a work cycle that has just been performed by the work machine, and selecting of the control parameter as a function of the work cycle determined in the previous step

Scope of the present invention is to provide a vehicle for baler application that may reduce the undulation of the speed of the motor of the vehicle. In figure 3B the desired speed is indicated with dotted line).

### SUMMARY OF THE INVENTION

The aforementioned aim is reached by the present invention as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 shows schematically an agricultural vehicle provided with a baler;
- Figure 2 is a simplified schema of a hybrid agricultural vehicle realized for baler application according to the present invention;
- Figures 3A, 3B and 3C show different values controlled;
- Figure 4 represents a first part of the control logic; and
- Figure 5 represents a second part of the control logic.

### DETAILED DESCRIPTION OF THE INVENTION

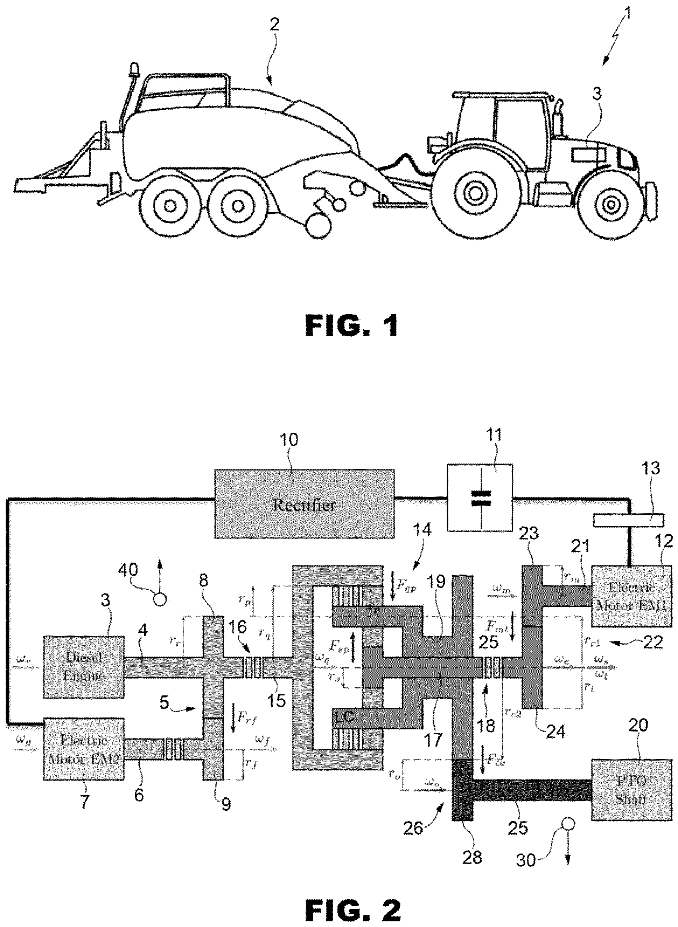

In figure 1, numeral 1 indicates a Hybrid agricultural vehicle, for instance a tractor, provided with a baler 2.

The vehicle comprises schematically (figure 2) an internal combustion engine 3 (typically a diesel engine) having an output shaft 4 that is connected through a first mechanical transmission 5 with an input shaft 6 of an electric motor 7 acting as a voltage generator in order to produce electrical power. The mechanical transmission 5 has been schematized by means of a first gear 8 mounted on output shaft 4 and having radius rᵣ and mating with a second gear 9 mounted on output shaft 6 and having radius r_{f}.

In the example rᵣ > r_{f}.

The generator 7 produces alternating voltage that is fed to a rectifier 10 that supplies the DC voltage to an electric energy storage unit 11 that is designed to store the electric power produced by the electric generator 7. The energy storage unit 11 may comprises supercapacitors or batteries.

An electric motor 12 is powered by a power control electronics 13 by the energy provided by the electric generator 7 and drawn from the electrical energy storage unit 11.

An epicyclic converter 14 has:
a first input member 15 (ring gear shaft) that is designed to receive torque from the engine output shaft 4 through a clutch 16;
a second input member 17 (sun gear shaft) that is designed to receive torque from the electrical motor 12 through a second clutch 18;
   an output member 19 (planetary carrier shaft) that is designed to provide torque to the Power Take-off Output (PTO) 20 of the vehicle, said torque supplied to the first input member 15 from the engine output shaft 4 through the clutch 16 and also supplied to the second input member 17 from the electrical motor 12 through the second clutch 18.

In the example, the output shaft 21 of the electric motor 12 is connected with the second input member 17 by means of a second transmission 22 that has been schematized by means of a third gear 23 mounted on the output shaft 21 and having radius rₘ and mating with a fourth gear 24 mounted on an output shaft 25 and having radius rₜ.

In the example rₜ > rₘ.

Clutch 18 is interposed between the output shaft 25 and the sun gear shaft 17 (second input member).

In the example, the output member 19 of the epicyclic converter 14 is connected with a PTO shaft 25 by means of a third transmission 26 that has been schematized by means of a geared portion of the output planetary carrier shaft 19 mating with a fifth gear 28 mounted on the PTO shaft 25.

The baler requires a variable torque that is undulating with a period τ between a higher value ***h*** (figure 3A) corresponding to a starting phase crop pressing to a lower value ***v*** corresponding to the end of the pressing.

According to the present invention the control electronics 13 is designed to control the torque supplied by the electric motor 12 so that the torque provided to the second input member 17 compensates torque request from the baler 2 so that the rotating speed of the internal combustion engine 3 remains substantially stable (figure 3B full line, the dotted line represent the desired speed) even if the torque requested by the baler is undulating. The extra energy necessary to mate with the baler torque request is drawn from the supercapacitor 11.

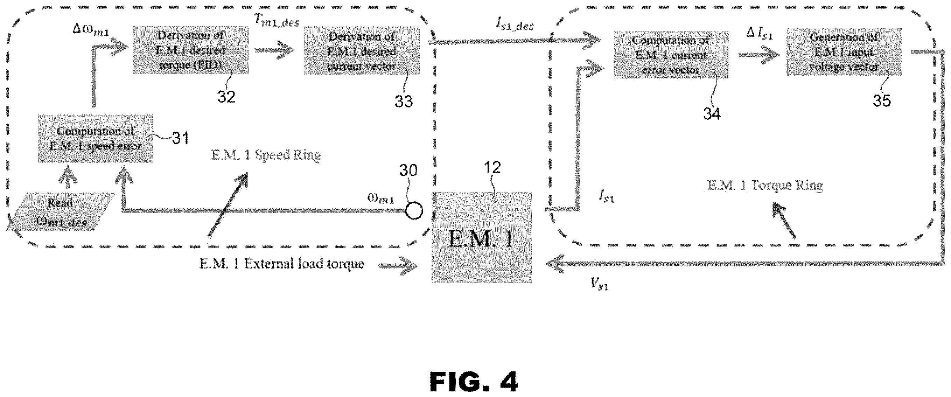

Figure 4 shows a control logic of power control electronics 12 performing the control from the side of the epicyclic convertor 14 towards the electric machine (electric motor) 12.

According to this control logic the speed of the shaft 25 is measured by means of a sensor 30 and the measured speed **ωₘ₁** is compared in a differential block 31 with a set speed **ωₘ₁-_{des}** and a difference signal **Δωₘ₁** is produced.

The difference signal **Δωₘ₁** is provided to a PID block 32 that produces at its output a signal **T_{m1_des}** that represents the torque increment necessary to keep the speed constant, i.e. minimizing **Δωₘ₁.**

The output a signal **T_{m1_des}** is provided to a fist converter block 33 that produces - using know techniques - a current vector **I_{s1-des}** that represents the current that has to be supplied by the electric motor 12 for obtaining the desired torque increment.

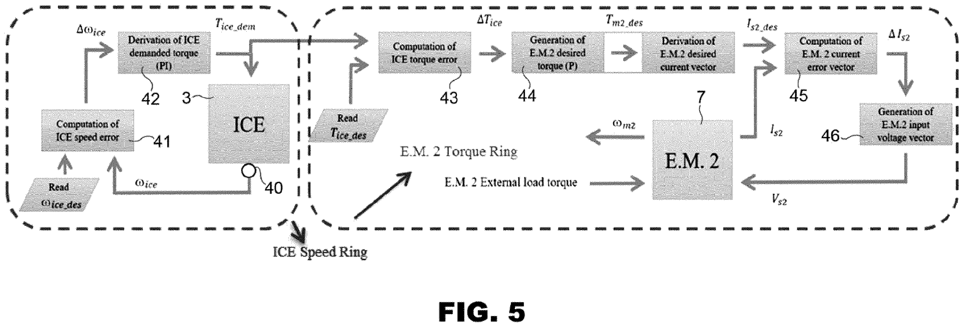

The current vector **I_{s1-des}** is compared (block 34) with the real current vector **Iₛ₁** that is present and measured in the electric motor 12 and the difference **Δ Iₛ₁** is supplied to a second converter block 35 that calculates the voltage **Vₛ₁** that has to be supplied to the motor 12 to compensate the torque request and keep the speed of the PTO shaft 20 constant. Figure 5 shows the speed & torque loop of the control logic of power control electronics 13 performing the control from the side of the epicyclic convertor 14 towards the electric machine (electric generator) 7.

According to this control logic the speed of the shaft 4 is measured by means of a sensor 40 and the measured speed **ω_{ice}** is compared in a differential block 41 with a set speed **ω_{ice}**-**_{des}** and a difference signal **Δω_{ice}** is produced. Set point **ω_{lce-des}** is calculated as function of the current ICE Power required.

The difference signal **Δω_{ice}** is provided to a PI block 42 that produces at its output a signal **T_{ice_dem}** that represents the torque requested by the internal combustion engine 7 (ICE) during its operation.

The output signal **T_{ice_dem}** is provided to another comparison block 43 that compares the signal **T_{ice_dem}** with a target signal **T_{ice_des}** and produces a difference signal **ΔT_ice.** This signal **ΔT_ice** - using know techniques - is converted into a current vector **Is_{2-des}** that represents the current that has to be supplied by the electric machine (electric generator) 7 for obtaining the desired torque adjustment.

The current vector **I_{s2-des}** is compared (block 45) with the real current vector **Iₛ₂** that is present and measured in the electric generator 7 (E.M.2) and the difference Δ **Iₛ₂** is supplied to a second converter block 46 that calculates the voltage **Vₛ₂** that has to be supplied to the electric generator 7 (E.M.2) to compensate the torque request and keep the speed of the ICE shaft 4 constant or controlled.

In this case, the torque loop on E.M.2 allow to compensate the torque peak on the ICE Side, while the Speed loop on the ICE, allow to control the ICE Engine Speed.

## Claims

1. Hybrid agricultural vehicle (1) that is designed to be coupled with a baler (2) for receiving torque from a Power Take-off Output PTO (20) of the agricultural vehicle, the vehicle comprising:
an internal combustion engine (3) having an output shaft (4) that is connected through a mechanical transmission (5) with an electric generator (7) that produces electrical power;
an electric energy storage unit (11) that is designed to store the electric power produced by the electric generator (7) ;
an electric motor (12) powered by a power control electronics (13) by the energy provided by the electric generator and drawn from the electrical energy storage unit (11) ;
an epicyclic convertor (14) having:
a first input member (15) that is designed to receive torque from the engine output shaft (4);
a second input member (17) that is designed to receive torque from the electric motor (12);
an output member (19) that is designed to provide the torque supplied to the first input member (15) and to the second output member (17) to the Power Torque Output PTO (20);
wherein said power control electronics (13) is designed to control the torque supplied by the electric motor so that the torque provided to the second input member compensates torque request from the baler (2) so that the rotating speed of the internal combustion engine (3) remains substantially stable even if the torque requested by the baler is undulating, **characterized in that** the power control electronics (13) is designed to perform the control of the electric motor (12) by the following;
a first sensor (30) is provided to measure the angular speed of the shaft (25), a first control logic provides a differential block (31) to compare the measured speed **ωₘ₁** with a set speed **ω_{m1-des}** and produce a difference signal **Δωₘ₁;** a PID block (32) that receives said difference signal **Δωₘ₁** and is designed to produce a signal **T_{m1_des}** that represents the torque increment necessary to keep the speed of the PTO shaft (20) constant;
a first converter block (33) designed to receive the output signal **T_{m1_des}** in order to calculate current vector **I_{s1-des}** that represents the current that has to be supplied by the electric motor (12) for obtaining the desired torque increment;
a second converter block (35) is designed to receive the difference **ΔIₛ₁** between the current vector **I_{s1-des}** and real current vector **Iₛ₁** that is present and measured in the electric motor (12); said second converter block (35) is designed to calculates the voltage **Vₛ₁** that has to be supplied to the motor (12) to compensate the torque request and keep the speed of the PTO shaft (20) constant.

2. Hybrid agricultural vehicle as defined in claim 1, wherein a first input member (15) is the ring gear shaft, the second input member (17) is the sun gear shaft and the output member (19) is the planetary carrier shaft.

3. Hybrid agricultural vehicle as defined in claim 1, wherein the power control electronics (13) is designed to perform the control of the electric generator (7) by the following:
a second sensor (40) designed to measure the speed **ω_{ice}** of the engine output shaft (4);
a second differential block (41) designed to compare said speed **ω_{ice}** with a set speed **ω_{ice-des}** and designed to produce a difference signal **Δω_{ice;}**
a PI block (42) receiving at its input said difference signal **Δω_{ice}** and designed to produce at its output a signal **T_{ice_dem}** that represents the torque requested by the internal combustion engine (3) during the operation;
a third differential block (43) designed to compare said output signal **T_{ice_dem}** with a target signal **T_{ice_des}** and designed to produce a difference signal **ΔT_ice;**
a third converter block (44) designed to convert said difference signal **ΔT_ice** into a current vector **I_{s2-des}** that represents the current that has to be supplied by the electric generator (7) for obtaining the desired torque increment;
a third differential block (45) designed to compare said current vector **I_{s2-des}** with the real current vector **Iₛ₂** that is present and measured in the electric generator (7) (E.M.2) to produce a difference signal **ΔIₛ₂**
a fourth converter block (46) receiving at its input said difference signal **ΔIₛ₂** and designed to calculate the voltage **Vₛ₂** that has to be supplied by the electric generator (7) to compensate the torque request and keep the speed of the internal combustion engine shaft (4) constant or controlled.

## Patentansprüche

1. Landwirtschaftliches Hybridfahrzeug (1), das dazu ausgebildet ist, mit einer Ballenpresse (2) gekoppelt zu werden, um ein Drehmoment von einem Zapfwellenausgang PTO (20) des landwirtschaftlichen Fahrzeugs zu empfangen, wobei das Fahrzeug umfasst:
einen Verbrennungsmotor (3) mit einer Ausgangswelle (4), die durch ein mechanisches Getriebe (5) mit einem elektrischen Generator (7) verbunden ist, der elektrische Leistung erzeugt;
eine Speichereinheit (11) für elektrische Energie, die dazu ausgebildet ist, die elektrische Leistung zu speichern, die von dem elektrischen Generator (7) erzeugt wird;
einen Elektromotor (12), der mittels einer Leistungssteuerungselektronik (13) von der Energie, die von dem elektrischen Generator bereitgestellt wird und die von der Speichereinheit (11) für elektrische Energie bezogen wird, angetrieben wird;
einen epizyklischen Wandler (14) mit:
einem ersten Eingangselement (15), das dazu ausgebildet ist, ein Drehmoment von der Motorausgangswelle (4) zu empfangen;
einem zweiten Eingangselement (17), das dazu ausgebildet ist, ein Drehmoment von dem Elektromotor (12) zu empfangen;
einem Ausgangselement (19), das dazu ausgebildet ist, das dem ersten Eingangselement (15) und dem zweiten Eingangselement (17) zugeführte Drehmoment dem Zapfwellenausgang PTO (20) bereitzustellen;
wobei die Leistungssteuerungselektronik (13) dazu ausgebildet ist, das von dem Elektromotor bereitgestellte Drehmoment derart zu steuern, dass das Drehmoment, das dem zweiten Eingangselement zugeführt wird, den Drehmomentbedarf der Ballenpresse (2) kompensiert, sodass die Rotationsgeschwindigkeit des Verbrennungsmotors (3) im Wesentlichen stabil bleibt, selbst wenn das von der Ballenpresse (2) angeforderte Drehmoment wellenförmig ist, **dadurch gekennzeichnet, dass** die Leistungssteuerungselektronik (13) dazu ausgebildet ist, die Steuerung des Elektromotors (12) durch das Folgende zu steuern:
einen ersten Sensor (30), der dazu vorgesehen ist, die Winkelgeschwindigkeit der Welle (25) zu messen, eine erste Steuerlogik, die einen Differenzblock (31) vorsieht, um die gemessene Geschwindigkeit ωₘ₁ mit einer Sollgeschwindigkeit ω_{m1-des} zu vergleichen und ein Differenzsignal Δωₘ₁ zu erzeugen; einen PID-Block (32), der das Differenzsignal Δωₘ₁ empfängt und der dazu ausgebildet ist, ein Signal T_{m1_des} zu erzeugen, das das Drehmomentinkrement darstellt, das erforderlich ist, um die Geschwindigkeit der PTO-Welle (20) konstant zu halten;
einen ersten Umwandlungsblock (33), der dazu ausgebildet ist, das Ausgangssignal T_{m1_des} zu empfangen, um den Stromvektor I_{s1-des} zu berechnen, der den Strom darstellt, der von dem Elektromotor (12) bereitgestellt werden muss, um das gewünschte Drehmomentinkrement zu erhalten;
einen zweiten Umwandlungsblock (35), der dazu ausgebildet ist, die Differenz ΔIₛ₁, zwischen dem Stromvektor I_{s1_des} und dem realen Stromvektor Iₛ₁ zu empfangen, der in dem Elektromotor (12) gegenwärtig ist und gemessen wird; wobei der zweite Umwandlungsblock (35) dazu ausgebildet ist, die Spannung Vₛ₁ zu berechnen, die dem Motor (12) bereitgestellt werden muss, um den Drehmomentbedarf zu kompensieren und die Geschwindigkeit der PTO-Welle (20) konstant zu halten.

2. Landwirtschaftliches Hybridfahrzeug nach Anspruch 1, wobei das erstes Eingangselement (15) die Hohlradwelle ist, das zweite Eingangselement (17) die Sonnenradwelle ist und das Ausgangselement (19) die Planetenträgerwelle ist.

3. Landwirtschaftliches Hybridfahrzeug nach Anspruch 1, wobei die Leistungssteuerungselektronik (13) dazu ausgebildet ist, die Steuerung des elektrischen Generators (7) durch das Folgende auszuführen:
einen zweiten Sensor (40), der dazu ausgebildet ist, die Geschwindigkeit ω_{ice} der Motorausgangswelle (4) zu messen;
einen zweiten Differenzblock (41), der dazu ausgebildet ist, die Geschwindigkeit ω_{ice} mit einer Sollgeschwindigkeit ω_{ice-des} zu vergleichen, und der dazu ausgebildet ist, ein Differenzsignal Δω_{ice} zu erzeugen;
einen PI-Block (42), der an seinem Eingang das Differenzsignal Δω_{ice} empfängt und der dazu ausgebildet ist, an seinem Ausgang ein Signal **T_{ice_dem}** zu erzeugen, das das von dem Verbrennungsmotor (3) während des Betriebs angeforderte Drehmoment darstellt;
einen dritten Differenzblock (43), der dazu ausgebildet ist, das Ausgangssignal T_{ice_dem} mit einem Soll-Signal T_{ice_des} zu vergleichen, und der dazu ausgebildet ist, ein Differenzsignal ΔT_ice zu erzeugen;
einen dritten Umwandlungsblock (44), der dazu ausgebildet ist, das Differenzsignal ΔT_ice in einen Stromvektor I_{s2-des} umzuwandeln, der den Strom darstellt, der von dem elektrischen Generator (7) bereitgestellt werden muss, um das gewünschte Drehmomentinkrement zu erhalten;
einen dritten Differenzblock (45), der dazu ausgebildet ist, den Stromvektor I_{s2-des} mit dem realen Stromvektor Iₛ₂ zu vergleichen, der in dem elektrischen Generator (7) (E.M.2) gegenwärtig ist und gemessen wird, um ein Differenzsignal ΔIₛ₂ zu erzeugen;
einen vierten Umwandlungsblock (46), der an seinem Eingang das Differenzsignal ΔIₛ₂ empfängt und der dazu ausgebildet ist, die Spannung Vₛ₂ zu berechnen, die von dem elektrischen Generator (7) bereitgestellt werden muss, um den Drehmomentbedarf zu kompensieren und die Geschwindigkeit der Verbrennungsmotorwelle (4) konstant oder geregelt zu halten.

## Revendications

1. Véhicule agricole hybride (1) conçu pour être associé à une presse à balles (2) pour recevoir le couple d'une prise de force (20) du véhicule agricole, le véhicule comprenant :
un moteur à combustion interne (3) ayant un arbre de sortie (4) qui est relié par une transmission mécanique (5) à un générateur électrique (7) qui produit de l'électricité ;
une unité de stockage de l'électricité (11) conçue pour stocker l'électricité produite par le générateur électrique (7) ;
un moteur électrique (12) alimenté par une électronique de commande de puissance (13) par l'énergie fournie par le générateur électrique et tirée de l'unité de stockage de l'électricité (11) ;
un convertisseur épicycloïdal (14) ayant :
un premier élément d'entrée (15) conçu pour recevoir le couple de l'arbre de sortie du moteur (4) ;
un second élément d'entrée (17) conçu pour recevoir le couple du moteur électrique (12) ;
un élément de sortie (19) conçu pour fournir le couple fourni au premier élément d'entrée (15) et au second élément de sortie (17) à la prise de force (20)
dans lequel ladite électronique de commande de puissance (13) est conçue pour commander le couple fourni par le moteur électrique de sorte que le couple fourni au second élément d'entrée compense la demande de couple de la presse à balles (2) de sorte que la vitesse de rotation du moteur à combustion interne (3) reste sensiblement stable même si le couple demandé par la presse à balles est ondulant, **caractérisé en ce que** l'électronique de commande de puissance (13) est conçue pour effectuer la commande du moteur électrique (12) de la manière suivante ;
un premier capteur (30) est prévu pour mesurer la vitesse angulaire de l'arbre (25), une première logique de commande fournit un bloc différentiel (31) pour comparer la vitesse mesurée **ωₘ₁** à une vitesse déterminée **ω_{m1-des}** et produire un signal de différence **Δ_{ωm1}** ; un bloc PID (32) qui reçoit ledit signal de différence **Δ_{ωm1},** et qui est conçu pour produire un signal _{Tm1_des} qui représente l'augmentation du couple nécessaire pour maintenir l'arbre de la prise de force (20) à une vitesse constante ;
un premier bloc convertisseur (33) conçu pour recevoir le signal de sortie _{Tm1_des} afin de calculer le vecteur de courant _{Is1_des} qui représente le courant qui doit être fourni par le moteur électrique (12) pour obtenir l'augmentation du couple souhaitée ; un deuxième bloc convertisseur (35) est conçu pour recevoir la différence _{ΔIs1} entre le vecteur de courant _{Is1-des} et le vecteur de courant réel _{Is1} présent et mesuré dans le moteur électrique (12) ; ledit deuxième bloc convertisseur (35) est conçu pour calculer la tension _{Vs1} qui doit être fournie au moteur (12) pour compenser la demande de couple et maintenir l'arbre de prise de force (20) à une vitesse constante.

2. Véhicule agricole hybride tel que défini dans la revendication 1, dans lequel un premier élément d'entrée (15) est l'arbre de la couronne, le second élément d'entrée (17) est l'arbre du planétaire et l'élément de sortie (19) est l'arbre du porte-satellite.

3. Véhicule agricole hybride tel que défini où l'électronique de commande de puissance (13) est conçue pour effectuer la commande du générateur électrique (7) de la manière suivante :
un second capteur (40) destiné à mesurer la vitesse ω_{ice} de l'arbre de sortie du moteur (4) ;
un deuxième bloc différentiel (41) conçu pour comparer ladite vitesse **ω_{ice}** à une vitesse déterminée **ω_{ice-des}** et produire un signal de différence **Δω_{ice}** ;
un bloc PI (42) recevant à son entrée ledit signal de différence **Δω_{ice}** et conçu pour produire à sa sortie un signal **_{Tice_dem}** qui représente le couple demandé par le moteur à combustion interne (3) pendant son fonctionnement ;
un troisième bloc différentiel (43) conçu pour comparer ledit signal de sortie **T_{ice_dem}** à un signal cible **T_{ice_des}** et produire un signal de différence **ΔT_ice** ;
un troisième bloc convertisseur (44) conçu pour convertir ledit signal de différence **ΔT_ice** en un vecteur de courant **_{Is2-des}** qui représente le courant qui doit être fourni par le générateur électrique (7) pour obtenir l'augmentation du couple désirée ;
un troisième bloc différentiel (45) conçu pour comparer ledit vecteur de courant **Is_{2-des}** au vecteur de courant **réel Iₛ₂** présent et mesuré dans le générateur électrique (7) (E.M.2) pour produire un signal de différence **Δlₛ₂**
un quatrième bloc convertisseur (46) recevant à son entrée ledit signal de différence **Δ_{Is2}** et conçu pour calculer la tension Vₛ₂ qui doit être fournie par le générateur électrique (7) pour compenser la demande de couple et maintenir l'arbre du moteur à combustion interne (4) à une vitesse constante ou commandée.
